(19) Europäisches Patentamt / European Patent Office / Office européen des brevets

(11) **EP 1 039 652 B1**

(12) **FASCICULE DE BREVET EUROPEEN**

(45) Date de publication et mention
de la délivrance du brevet:
**14.03.2007 Bulletin 2007/11**

(51) Int Cl.:
***H04B 1/48*** *(2006.01)*

(21) Numéro de dépôt: **99105663.1**

(22) Date de dépôt: **19.03.1999**

(54) **Arrangement d'antenne**

Antenneanordnung

Antenna arrangement

(84) Etats contractants désignés:
**CH DE DK FI FR GB IT LI NL SE**

(43) Date de publication de la demande:
**27.09.2000 Bulletin 2000/39**

(73) Titulaire: **ASULAB S.A.**
**2074 Marin (CH)**

(72) Inventeurs:
• **Zellweger, Emil**
**4514 Lommiswil (CH)**
• **Lott, Urs**
**8032 Zürich (CH)**
• **Kucera, Jacob**
**8001 Zürich (DE)**

(74) Mandataire: **Ravenel, Thierry Gérard Louis et al
I C B,
Ingénieurs Conseils en Brevets SA,
7, rue des Sors
2074 Marin (CH)**

(56) Documents cités:
**EP-A- 0 714 177       EP-A- 0 878 918
US-A- 5 678 199**

## Description

La présente invention concerne le domaine technique des arrangements d'antenne.

Classiquement, on utilise un arrangement d'antenne comprenant une antenne, un récepteur et un émetteur, et pouvant coupler alternativement l'antenne à l'émetteur (en phase d'émission) et au récepteur (en phase de réception).

Un problème rencontré dans un tel arrangement d'antenne est de réaliser un couplage optimal entre l'émetteur et l'antenne.

En se référant à la figure 1A de la présente description, le document GB 2.323.799 de Motorola Israël décrit un arrangement d'antenne 10 comprenant une antenne A, un émetteur (ce dernier comprenant en sortie un amplificateur de puissance 16), et un moyen de couplage 18 entre l'antenne A et l'émetteur.

Le moyen de couplage 18 est formé par une ligne de transmission pouvant transformer l'impédance de sortie de l'amplificateur 16, comme cela est décrit de façon plus détaillée ci-après. On notera que la ligne 18 fonctionne comme un circuit à retard de phase.

On note que la ligne 18 permet d'isoler l'émetteur de l'antenne A, dans le cas où cette dernière n'est pas en phase d'émission (notamment en phase de réception). En effet, dans ce cas, l'amplificateur de puissance 16 est commandé pour ne pas fournir de signal, et son impédance de sortie est alors de nature fortement réactive. La ligne 18 est ainsi agencée de sorte que l'impédance vue de l'antenne A vers l'émetteur correspond à celle d'un circuit ouvert (impédance élevée). Autrement dit, l'émetteur est isolé de l'antenne A, et un signal radiofréquence reçu par l'antenne A est fourni au récepteur.

Un inconvénient de l'arrangement d'antenne 10 est qu'il comprend des lignes de transmission, ce qui occasionne un encombrement notable pour cet arrangement.

Un autre inconvénient de arrangement d'antenne 10 est qu'il nécessite la réalisation d'un circuit supplémentaire pouvant commander l'amplificateur de puissance 16, ce qui va à l'encontre des préoccupations habituelles en industrie de limitation de l'encombrement, du poids, de la consommation électrique et donc du coût de fabrication et d'utilisation.

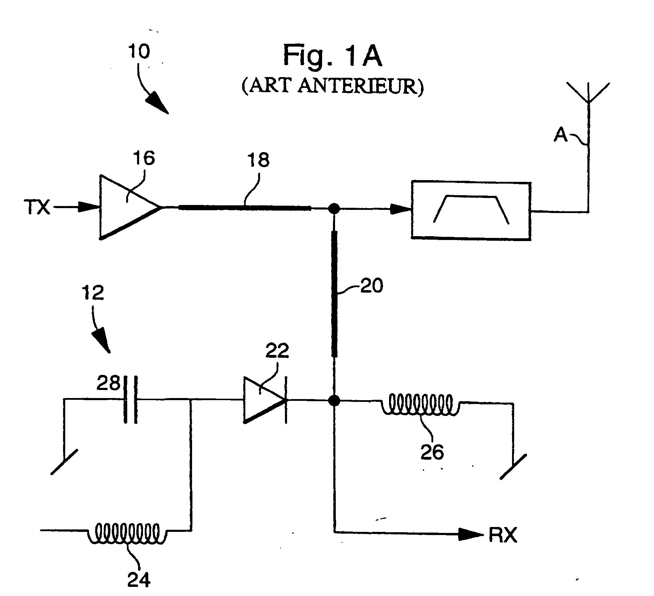

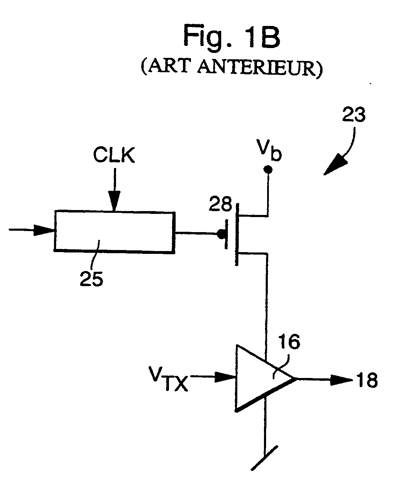

En se référant à la figure 1B de la présente description, le document « Drain supply switching of mobile phone power amps with pulsed operation mode », Siemens Application Note No. 009, Discrete and RF semiconductor division, Edition A03, décrit un circuit de commande 23 comprenant un moyen de commande 25 et un transistor à effet de champ 28 (et à canal de type P). Le transistor 28 est connecté entre une borne d'alimentation (pour recevoir la tension d'alimentation Vb) et la masse du système, par l'intermédiaire des bornes d'alimentation de l'amplificateur de puissance 16. Le transistor 28 est commandé par le moyen de commande 25 de sorte que, quand l'antenne A est en phase d'émission, l'amplificateur 16 peut fournir un signal radiofréquence (RF) suffisamment puissant de l'émetteur vers l'antenne A, avec un minimum de pertes de puissance électrique.

En outre, la Demanderesse de la présente invention a observé que, quand l'antenne A est en phase d'émission, la fourniture du signal radiofréquence n'est pas optimale, du point de vue des pertes de puissance électrique, et que, quand l'antenne A n'est pas en phase d'émission, l'isolement de l'émetteur et de l'antenne A n'est pas optimal, puisque l'impédance de sortie de l'amplificateur 16 peut varier.

Le document EP 848 918 décrit un autre arrangement d'antenne qui comprend de moyens pour la isolation de l'émetteur et de l'antenne.

Un objet de la présente invention est de prévoir un arrangement d'antenne comprenant une antenne et un émetteur, cet arrangement palliant les inconvénients susmentionnés, pour fournir un couplage optimal entre l'émetteur et l'antenne, c'est-à-dire un couplage provoquant un minimum de pertes de puissance électrique RF.

Un autre objet de la présente invention est de prévoir un arrangement d'antenne pouvant fournir une commande de l'amplificateur de puissance de l'émetteur, sans avoir recours à des composants supplémentaires (par exemple à un transistor à effet de champ et à canal de type P).

Un autre objet de la présente invention est de prévoir un arrangement d'antenne répondant aux critères de moindre complexité, de faible consommation, d'encombrement moindre et de coût réduit, qui sont traditionnels en télécommunication.

Ces objets, ainsi que d'autres, sont atteints par l'arrangement d'antenne selon la revendication 1.

Ces objets et caractéristiques, ainsi que d'autres, de la présente invention apparaîtront plus clairement à la lecture de la description détaillée de quatre modes de réalisation de l'invention, donnés à titre d'exemples uniquement, en relation avec les figures jointes, parmi lesquelles :

- la figure 1A déjà citée représente un arrangement d'antenne selon l'art antérieur;
- la figure 1 B déjà citée représente un circuit de commande classique pouvant équiper l'arrangement d'antenne de la figure 1A;
- la figure 2 représente un mode de réalisation préféré d'un arrangement d'antenne selon la présente invention comprenant une antenne, un récepteur, un émetteur et un moyen de couplage ;
- la figure 3 représente un mode de réalisation du récepteur de la figure 2;
- la figure 4 représente un circuit du moyen de couplage de la figure 2;
- la figure 5 représente un premier perfectionnement de l'arrangement d'antenne de la figure 2;
- la figure 6 représente un deuxième perfectionnement de l'arrangement d'antenne de la figure 2; et

- la figure 7 représente une troisième perfectionnement de l'arrangement d'antenne de la figure 2.

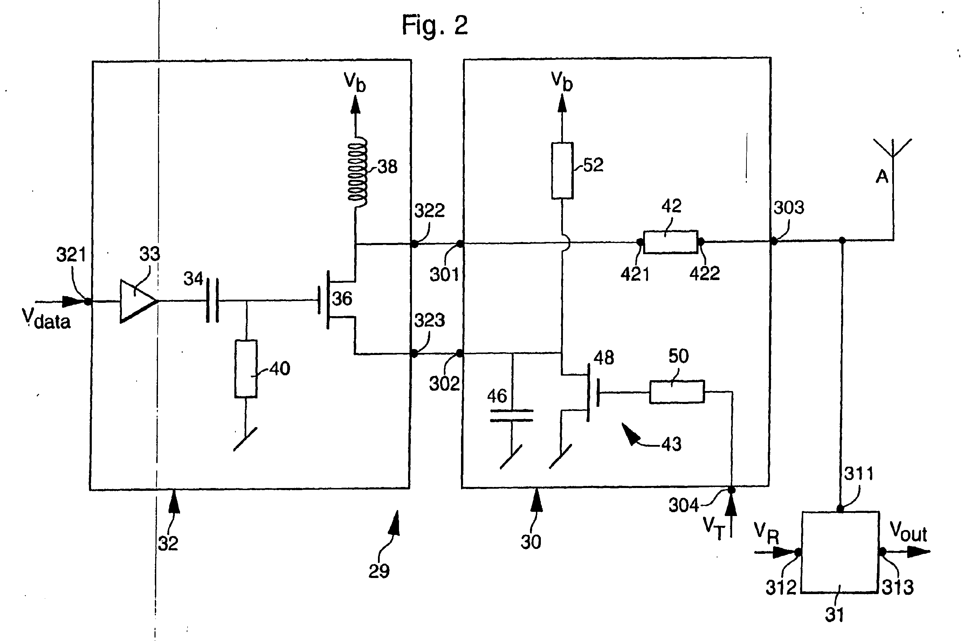

En se référant à la figure 2, un arrangement d'antenne 29 comprend une antenne A, un émetteur 32 et un moyen de couplage 30. L'arrangement d'antenne 29 peut comprendre également un récepteur 31 ; toutefois, l'homme du métier notera que le mode de réalisation du récepteur 31 est indépendant du couplage entre l'émetteur 32 et l'antenne A, c'est-à-dire du fonctionnement du moyen de couplage 30.

L'émetteur 32 comprend une borne d'entrée 321 connectée à une unité de traitement (non représentée en figure 2), pour pouvoir recevoir une tension électrique $V_{data}$ qui représente typiquement des données que l'antenne A doit émettre en phase d'émission. L'émetteur 32 comprend également deux bornes de connexion 322 et 323 connectées au moyen de couplage 30, comme cela est décrit ci-après.

L'émetteur 32 est agencé pour fournir un signal radiofréquence RF suffisamment puissant à l'antenne A. A cet effet, l'émetteur 32 comprend un préamplificateur 33, un condensateur 34, une inductance 38, une haute impédance 40 et un transistor à effet de champ 36 (qui est à canal de type N, dans cet exemple).

Le préamplificateur 33 est connecté en cascade avec le transistor 36. La borne de grille du transistor 36 est connectée à la masse du système, par l'intermédiaire de la haute impédance 40, ainsi qu'à la borne 321 de l'émetteur 32, par l'intermédiaire du préamplificateur 33 et du condensateur 34. La borne de drain du transistor 36 est connectée à la borne 322 de l'émetteur 32, ainsi qu'à une borne d'alimentation, par l'intermédiaire de l'inductance 38, pour recevoir une tension d'alimentation Vb. Et la borne de source du transistor 36 est connectée à la borne 323 de l'émetteur 32.

Le condensateur 34 permet de filtrer le signal provenant du préamplificateur 33, pour fournir un signal radiofréquence (celui-ci commandant le transistor 36).

Le récepteur 31 comprend une borne d'entrée 311 connectée à l'antenne A, pour pouvoir recevoir les données que l'antenne A reçoit en phase de réception, et une borne de sortie 313 pour pouvoir fournir une tension Vout contenant les données reçues. Le récepteur 31 comprend également une borne de commande 312 connectée à un premier moyen de commande (non représentée en figure 2), pour recevoir une tension électrique $V_R$ propre à commander le couplage du récepteur 31 et de l'antenne A. Le premier moyen de commande peut être réalisé par l'unité de traitement connecté à l'émetteur 32.

Le récepteur 31 est agencé pour être couplé à l'antenne A quand celle-ci est en phase de réception, et pour être protégé de l'émetteur 32, quand l'antenne A n'est pas en phase de réception.

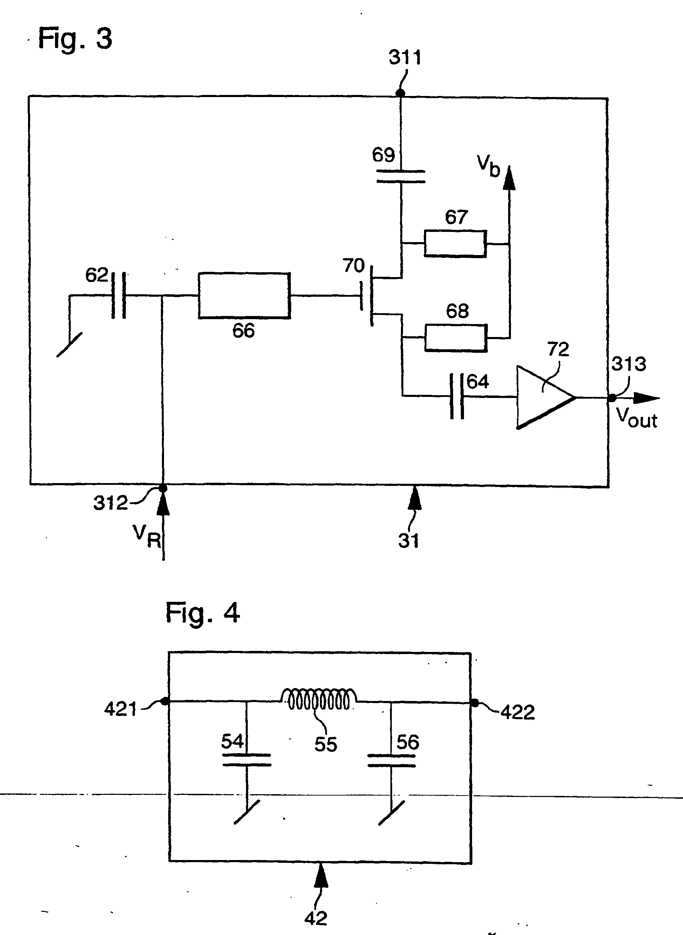

A titre illustratif uniquement, on va décrire un mode de réalisation du récepteur 31, en se référant à la figure 3 qui représente trois condensateurs 62, 64 et 69, trois hautes impédances 66, 67 et 68, un amplificateur à faible bruit 72 et un transistor à effet de champ 70 (qui est à canal de type N, dans cet exemple). On note que des éléments de la figure 3 identiques à ceux décrits en relation de la figure 2 ont été désignés par les mêmes références.

Comme le représente la figure 3, l'amplificateur 72, le condensateur 69, le transistor 70 et le condensateur 64 sont connectés en série entre la borne d'entrée 311 et la borne de sortie 313. La borne de grille du transistor 70 est connectée à la borne de commande 312, par l'intermédiaire de la résistance 66, et les borne de drain et de source de ce transistor sont connectées, par l'intermédiaire des hautes impédances respectives 67 et 68, à une borne d'alimentation pouvant recevoir la tension d'alimentation Vb. Le condensateur 62 est connecté entre la borne de commande 312 et la masse du système. Dans l'exemple représenté en figure 3, la tension électrique VR est égale à un état haut ou « 1 » (respectivement à un état-bas ou « 0 »), quand l'antenne doit (respectivement ne doit pas) être connectée à l'amplificateur 72, c'est-à-dire être (respectivement ne pas être) en phase de réception. Ainsi, quand l'antenne A n'est pas en phase de réception (notamment quand elle est en phase d'émission), le récepteur 31 est isolé de l'émetteur 32. Ceci assure la protection de ce récepteur vis-à-vis du signal radiofréquence fourni par l'émetteur 32 à l'antenne A.

En se référant à nouveau à la figure 2, le moyen de couplage 30 comprend une borne de commande 304 connectée à un deuxième moyen de commande (non représentée en figure 2), pour pouvoir recevoir une tension électrique $V_T$ propre à commander le couplage de l'émetteur 32 et de l'antenne A. On note que le deuxième moyen de commande peut être réalisé par l'unité de traitement connecté au récepteur 31 et, dans ce cas, que

$$V_T = \overline{V_R}.$$

Dans le cas de l'exemple représenté en figure 2, la tension électrique $V_T$ est égale à un état haut ou « 1 » (respectivement à un état bas ou « 0 »), quand l'antenne A doit (respectivement ne doit pas) être en phase d'émission. Le moyen de couplage 30 comprend également deux bornes de connexion 301 et 302 connectées respectivement aux bornes 322 et 323 de l'émetteur 32, et une borne de sortie 303 connectée à l'antenne A.

Le moyen de couplage 30 comprend un circuit à retard de phase 42 pouvant réaliser le couplage de l'antenne A et de l'émetteur 32, et un moyen de commutation 43 pouvant commander l'état du transistor 36, de sorte que ce dernier est à un état passant (respectivement à un état bloqué), quand l'antenne est (respectivement n'est pas) en phase d'émission. A cet effet, le circuit de commutation 43 comprend un condensateur 46, deux résistances 50 et 52 et un transistor à effet de champ 48 (qui est à canal de type N, dans cet exemple).

Pour l'essentiel, l'état du transistor 48 commande l'état du transistor 36, de sorte que, quand le transistor 48 est à un état passant (respectivement à un état bloqué), le transistor 36 est à l'état passant (respectivement à l'état bloqué). A cet effet, la borne de grille du transistor 48 est connectée à la borne 304 du moyen de couplage 30 par l'intermédiaire de la résistance 50, pour pouvoir recevoir la tension $V_T$ qui commande la commutation du transistor 48 à l'état passant ou à l'état bloqué. On note que, quand la tension $V_T$ vaut « 0 » (respectivement « 1 »), le transistor 48 est à l'état bloqué (respectivement à l'état passant). La borne de source du transistor 48 est connectée à la masse du système. La borne de drain du transistor 48 est connectée à la borne 302 du moyen de couplage 30, ainsi qu'à une borne d'alimentation par l'intermédiaire de la résistance 52, pour pouvoir recevoir la tension d'alimentation Vb. On notera que la valeur de la résistance 52 est de préférence élevée.

Le condensateur 46 est connecté entre la borne 302 du moyen de couplage 30 et la masse du système, c'est-à-dire est connecté en parallèle des bornes de drain et de source du transistor 48. L'homme du métier note que le condensateur 46 a l'avantage de permettre l'écoulement vers la masse du système des charges du courant RF provenant de l'émetteur 32, quand l'antenne A est en phase d'émission. Ceci évite l'écoulement de telles charges à travers le transistor 48.

Le circuit à retard de phase 42 comprend deux bornes 421 et 422 connectés respectivement aux bornes 301 et 303 du moyen de couplage 30. Le circuit à retard de phase 42 est agencé de sorte que l'impédance vue de l'antenne A vers l'émetteur 32 correspond à celle à l'adaptation, quand l'antenne A est en phase d'émission, et à celle d'un circuit ouvert (impédance élevée) quand l'antenne A n'est pas en phase d'émission. A cet effet, et en se référant à la figure 4, on réalise de préférence le circuit à retard de phase 42 à partir d'une inductance 55 et deux condensateurs 54 et 56. On note que des éléments de la figure 4 identiques à ceux décrits en relation de la figure 2 ont été désignés par les mêmes références.

Comme le représente la figure 4, l'inductance 55 est connectée entre les bornes 421 et 422 de ce circuit. Le condensateur 54 est connecté entre la borne 421 de ce circuit et la masse du système. Et le condensateur 56 est connecté entre la borne 422 de ce circuit et la masse du système.

L'homme du métier note que le moyen de couplage 30, l'émetteur 32 et le récepteur 31 peuvent être réalisés de façon monolithique dans un unique substrat, et que l'antenne A peut également être réalisée de façon monolithique dans ce substrat.

Un avantage de réaliser le moyen de couplage 30 et l'émetteur 32 est de former une structure intégrée adaptée à des dispositifs de communication, en raison de sa compacité, de sa faible consommation en puissance électrique et donc de son coût.

Un autre avantage d'une telle réalisation intégrée est de ne pas comprendre de lignes de transmission, celles-ci étant des structures encombrantes à réaliser sur un substrat semiconducteur.

On va maintenant décrire le fonctionnement du moyen de couplage 30 dans arrangement d'antenne 29, quand l'antenne A est (ou n'est pas) en phase d'émission, en se référant à la figure 2.

Considérons le cas où l'antenne A est en phase d'émission.

Le moyen de couplage 30 reçoit la tension $V_T$ valant « 1 », ce qui provoque la conduction du transistor 48. Il en résulte que la borne de source du transistor 36 est mise à la masse du système, par l'intermédiaire de la résistance présente entre les bornes de source et de drain du transistor 48. Ainsi, le transistor 36 est à l'état passant, et la tension $V_{data}$ contenant les données à émettre commande le transistor 36, c'est-à-dire la fourniture de ces données à l'antenne A.

L'homme du métier note que le transistor 48 peut être commandé par une rampe de tension, de sorte que la puissance RF a une forme de rampe, ce qui est nécessaire notamment pour les applications dites TDMA (acronyme provenant de l'anglais "Time Division Multiple Access").

Considérons maintenant le cas où l'antenne A n'est pas en phase d'émission (ce cas couvrant notamment la situation où l'antenne A est en phase de réception).

Le moyen de couplage 30 reçoit la tension $V_T$ valant « 0 », ce qui provoque le blocage du transistor 48. Il en résulte que la borne de source du transistor 36 est connectée à la borne d'alimentation, par l'intermédiaire de la résistance 52, de sorte que la tension électrique présente sur cette borne est sensiblement égale à celle présente sur la borne de drain du transistor 36. En outre, la borne de grille de ce dernier est connectée à la masse du système, par l'intermédiaire de l'impédance 40, de sorte que la tension électrique présente entre la borne de grille et la borne de source est sensiblement inférieure à la tension de seuil du transistor 36, ce qui provoque son blocage. Le transistor 36 a alors une impédance de sortie élevée. Ainsi l'impédance présente à la borne 421 du circuit à retard de phase 42 est élevée, et l'impédance vue de l'antenne A vers l'émetteur 32 (c'est-à-dire vers la borne 303) correspond à celle d'un circuit ouvert. Ainsi, en phase de réception, les données reçues par l'antenne A sont fournies à la borne 311 du récepteur 31 uniquement.

Un avantage du moyen de couplage 30 est de pouvoir commander, en phase d'émission, la fourniture du signal radiofréquence de l'émetteur 32 à l'antenne A, sans occasionner de pertes de puissance électrique. En effet, quand l'antenne A doit être en phase d'émission, le transistor 48 est à l'état passant, ce qui connecte la borne de source du transistor 36 à la masse du système. Il en ressort que les pertes de puissance électrique sont notablement réduites, quand le transistor 36 fournit les données que l'antenne A doit émettre. Ceci réalise un couplage optimal (c'est-à-dire avec un minimum de pertes de puissance électrique) entre l'émetteur et l'antenne, quand celle-ci est en phase d'émission.

Un autre avantage d'un tel moyen de couplage est d'assurer le blocage du transistor de sortie de l'amplificateur de puissance de l'émetteur, quand l'antenne A n'est pas en phase d'émission. Il en résulte que l'impédance vue de l'antenne A vers l'émetteur 32 correspond idéalement à celle d'un circuit ouvert (impédance élevée), ce qui isole parfaitement l'émetteur de l'antenne, quand celle-ci n'est pas en phase d'émission. Autrement dit, ceci réalise une isolation optimale entre l'émetteur et l'antenne, quand celle-ci n'est pas en phase d'émission.

Un avantage du moyen de couplage 30 est de pouvoir commander le couplage de l'émetteur 32 et de l'antenne A, quand cette dernière doit (respectivement ne doit pas) être en phase d'émission, tout en commandant la fourniture du signal radiofréquence à émettre, par l'intermédiaire du transistor 36, et sans avoir recours à des composants supplémentaires.

Il va de soi pour l'homme du métier que la description détaillée ci-dessus peut subir diverses modifications, variantes et perfectionnements sans sortir du cadre de la présente invention.

A titre de variante de réalisation, le circuit à retard de phase 42 peut être formé par une ligne de transmission de type quart d'onde.

A titre de variante de réalisation également, les transistors 36, 48 et 33 peuvent être formés par des transistors bipolaires, et la source de tension 74 est alors remplacée par une source de courant, c'est-à-dire par un générateur pouvant fournir un signal constant de sorte que le transistor est à l'état passant.

A titre de perfectionnement, le transistor 48 est réalisé pour avoir un canal de type N, ce qui a pour avantage que, quand ce transistor est à l'état passant, la résistance présente entre ses bornes de drain et de source est peu élevée (en comparaison avec celle d'un transistor à effet de champ et à canal de type P connecté à la borne d'alimentation). Ainsi le potentiel électrique présent à la borne de source du transistor 36 est sensiblement égal à celui de la masse du système.

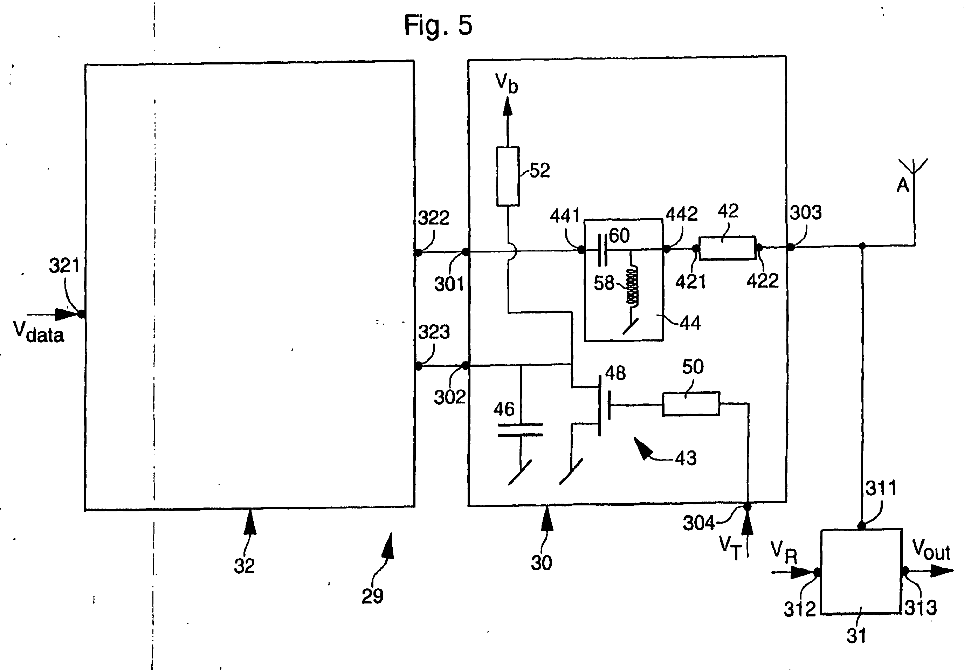

A titre de perfectionnement également, le moyen de couplage 30 peut comprendre en outre un moyen d'ajustement 44 connecté entre le circuit à retard de phase 42 et l'émetteur 32. On note que des éléments de la figure 5 similaires à ceux décrits en relation de la figure 2 ont été désignés par les mêmes références. Le moyen d'ajustement 44 comprend une inductance 58 et un condensateur 60. Le condensateur 60 est connecté entre le circuit à retard de phase 42 et l'émetteur T, et l'inductance 58 est connectée, d'une part, au condensateur 60 et au circuit à retard de phase 42 et, d'autre part, à la masse du système. L'inductance 58 et le condensateur 60 sont formés de manière à optimiser le transfert de l'énergie RF entre les bornes 322 de l'émetteur 32 et la borne 303 du moyen de couplage 30 (c'est-à-dire à rendre minimales les pertes de puissance RF), quand l'antenne A n'est pas en phase d'émission.

Un avantage du moyen d'ajustement 44 est de pallier les variations de paramètres du circuit à retard de phase 42 liées à sa fabrication, de sorte que l'impédance vue de l'antenne A vers l'émetteur 32 (c'est-à-dire vers la borne 303) correspond parfaitement à celle d'un circuit ouvert (impédance élevée), quand l'antenne A n'est pas en phase d'émission (notamment quand elle est en phase de réception).

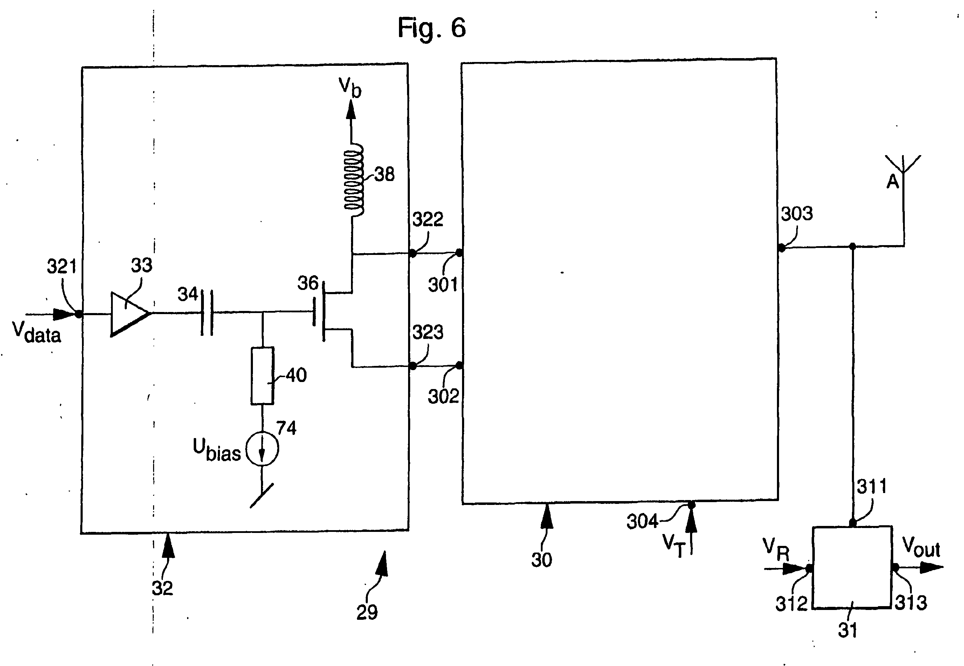

A titre de perfectionnement également, l'émetteur 32 peut comprendre en outre une source de tension 74 connectée en série entre la haute impédance 40 et la masse du système. On note que des éléments de la figure 6 similaires à ceux décrits en relation de la figure 2 ont été désignés par les mêmes références. La source 74 est agencée pour pouvoir fournir une tension électrique Ubias constante, de sorte que la tension électrique présente entre la borne de grille du transistor 36 et la masse du système est supérieure à la tension de seuil Vth de ce transistor. Ainsi, la valeur constante de la tension électrique Ubias dépend de la tension de seuil Vth et, par exemple, est égale à un niveau de tension élevée si la tension de seuil Vth est élevée.

Un avantage de l'agencement de la source 74 est qu'elle assure en phase d'émission la conduction du transistor 36, c'est-à-dire la fourniture du signal radiofréquence à l'antenne A.

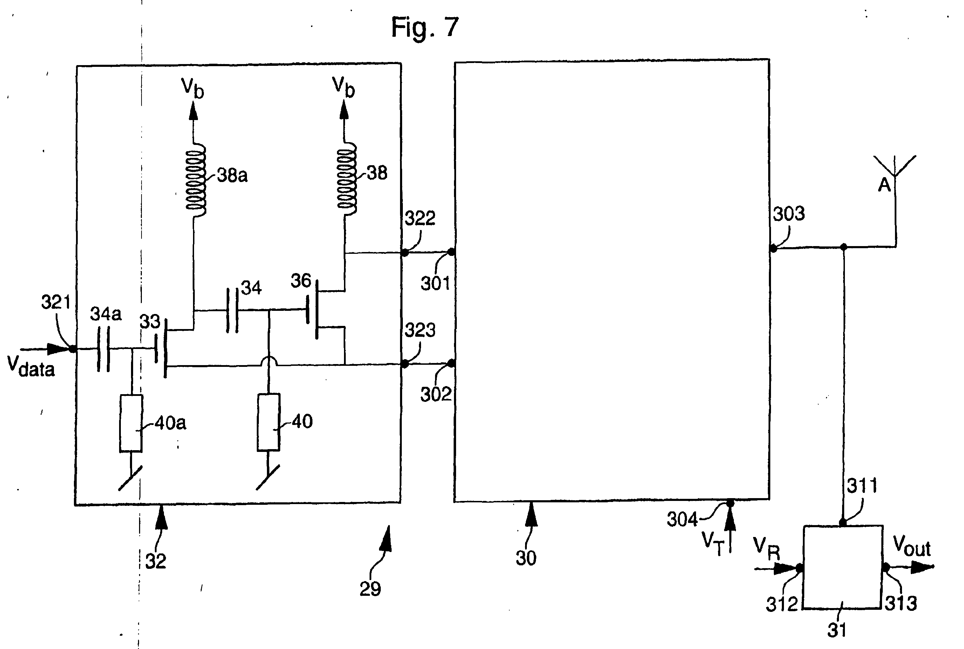

A titre de perfectionnement également, le transistor 48 du moyen de couplage 30 peut également commander le préamplificateur 33, c'est-à-dire, dans le cas où ce dernier est formé par un transistor à effet de champ, la commutation de ce transistor à un état bloqué ou à un état passant. A cet effet, l'émetteur 32 peut comprendre en outre une inductance 38a, une haute impédance 40a et un condensateur 34a, ces composants étant agencés de sorte que le moyen de commutation 43 peut commuter le préamplificateur 33 à un état activé, respectivement à un état désactivé, quand ladite antenne A est, respectivement n'est pas, en phase d'émission. On note que des éléments de la figure 7 similaires à ceux décrits en relation de la figure 2 ont été désignés par les mêmes références. Le transistor formant le préamplificateur 33 (qui est à canal de type N, dans cet exemple) a une borne de grille connectée à la borne 321 par l'intermédiaire du condensateur 34a, ainsi qu'à la masse du système par l'intermédiaire de la haute impédance 40a, une borne de source connectée à celle du transistor 36, et une borne de drain connectée au condensateur 34, ainsi qu'à une borne d'alimentation par l'intermédiaire de l'inductance 38a. L'homme du métier note que, dans ce mode perfectionné, le condensateur 46 du moyen de couplage est agencé à proximité du transistor 36 et du préamplificateur 33.

Un avantage d'un tel agencement de arrangement d'antenne 29 est de pouvoir commander à la fois le préamplificateur 33 et le transistor 36. Ceci permet de supprimer l'inutile consommation en puissance électrique du préamplificateur 33, quand l'antenne A n'est pas en phase d'émission. On note en outre qu'une telle commande du préamplificateur 33 peut être réalisé sans avoir recours à un circuit de commande supplémentaire.

## Revendications

1. Arrangement d'antenne (29) comprenant :

   - une antenne (A) pouvant transmettre des données sous la forme d'un signal radiofréquence;
   - un émetteur (32) comprenant un préamplificateur (33) et un premier transistor (36) connectés en cascade, cet émetteur pouvant fournir à ladite antenne un signal radiofréquence contenant lesdites données à émettre; et
   - un moyen de couplage (30) connecté entre ladite antenne et ledit émetteur, et comprenant un circuit à retard de phase (42) pouvant réaliser le couplage de ladite antenne et dudit émetteur,

   cet arrangement d'antenne étant **caractérisé en ce que** ledit moyen de couplage comprend en outre un moyen de commutation (43) connecté entre la masse du système et la borne de source dudit premier transistor, de manière à pouvoir commuter ce dernier à un état passant, respectivement à un état bloqué, quand ladite antenne est, respectivement n'est pas, en phase d'émission.

2. Arrangement d'antenne (29) selon la revendication 1, **caractérisé en ce que** ledit premier transistor (36) est formé par un transistor à effet de champ et à canal ayant une conductivité de type N.

3. Arrangement d'antenne (29) selon la revendication 1, **caractérisé en ce que** ledit moyen de commutation (43) comprend :

   - un deuxième transistor (48) pouvant être commandé par un premier signal de commande ($V_T$) représentatif du fait que ladite antenne est, respectivement n'est pas, en phase d'émission et, en réponse, être à un état passant, respectivement à un état bloqué, de sorte que ledit premier transistor est lui-même à l'état passant, respectivement l'état bloqué;
   - un premier condensateur (46) connecté en parallèle sur les bornes de drain et de source dudit deuxième transistor (48) ; et
   - une première résistance (52) connecté, d'une part, au point de raccordement entre ledit premier condensateur (46) et ledit deuxième transistor et, d'autre part, à une borne d'alimentation

4. Arrangement d'antenne (29) selon la revendication 1, **caractérisé en ce que** ledit deuxième transistor (48) est formé par un transistor à effet de champ et à canal ayant une conductivité de type N.

5. Arrangement d'antenne (29) selon la revendication 1, **caractérisé en ce que** ledit circuit à retard de phase (42) comprend une première inductance (55) et des deuxième et troisième condensateurs (54, 56).

6. Arrangement d'antenne (29) selon la revendication 1, **caractérisé en ce que** ledit moyen de couplage (30) comprend en outre un moyen d'ajustement (44) connecté en série entre ledit émetteur (32) et ledit circuit de retard de phase (42).

7. Arrangement d'antenne (29) selon la revendication 6, **caractérisé en ce que** ledit moyen d'ajustement (44) comprend un quatrième condensateur (60) et une deuxième inductance (58).

8. Arrangement d'antenne (29) selon la revendication 1, **caractérisé en ce que** ledit émetteur comprend en outre :

   - un cinquième condensateur (34) connecté en série entre ledit préamplificateur (33) et ledit premier transistor (36);
   - une première haute impédance (40) connectée entre la masse du système et le point de raccordement dudit premier transistor et dudit amplificateur de puissance; et
   - une troisième inductance (38) en série avec ledit premier transistor entre une borne d'alimentation et la masse du système.

9. Arrangement d'antenne (29) selon la revendication 8, **caractérisé en ce que** ledit émetteur (32) comprend en outre un générateur (74) connecté en série entre ladite première haute impédance (40) et la masse du système, ce générateur pouvant fournir un signal constant (Ubias) de sorte que ledit premier transistor (36) est à l'état passant.

10. Arrangement d'antenne (29) selon la revendication 8, **caractérisé en ce que** ledit émetteur (32) comprend en outre une quatrième inductance (38a), une deuxième haute impédance (40a) et un sixième condensateur (34a), ces composants étant agencés de sorte que ledit moyen de commutation (43) peut commuter ledit préamplificateur (33) à un état activé, respectivement à un état désactivé, quand ladite antenne (A) est, respectivement n'est pas, en phase d'émission.

11. Arrangement d'antenne (29) selon la revendication 10, **caractérisé en ce que** ledit préamplificateur (33) est formé par un troisième transistor pouvant être à un état passant, respectivement à un état bloqué, quand ledit deuxième transistor (48) est lui-même à l'état passant, respectivement à l'état bloqué.

**12.** Arrangement d'antenne (29) selon la revendication 11,

**caractérisé en ce que** ledit troisième transistor est formé par un transistor à effet de champ et à canal ayant une conductivité de type N.

**13.** Arrangement d'antenne (29) selon la revendication 1, **caractérisé en ce qu'**il comprend en outre un récepteur (31) pouvant être couplé à ladite antenne quand celle-ci est en phase de réception, et être protégé dudit émetteur quand celle-ci n'est pas en phase de réception; et **en ce que** ledit récepteur est connecté entre ledit moyen de couplage (30) et ladite antenne (A), de sorte que, quand celle-ci n'est pas couplée audit émetteur (32), ce dernier est isolé dudit récepteur, ce qui assure un couplage optimal entre ladite antenne et ledit récepteur.

**14.** Arrangement d'antenne (29) selon la revendication 1, **caractérisé en ce que** ledit émetteur (32) et ledit moyen de couplage (30) sont réalisés de façon monolithique dans un unique substrat semiconducteur.

**15.** Arrangement d'antenne (29) selon la revendication 14,

**caractérisé en ce que** ladite antenne (A) est réalisée de façon monolithique dans ledit substrat semiconducteur.

**16.** Arrangement d'antenne (29) selon la revendication 13,

**caractérisé en ce que** ledit récepteur (31) est réalisé de façon monolithique dans ledit substrat semiconducteur.

**Claims**

**1.** Antenna arrangement (29) including:

- an antenna (A) able to transmit data in the form of a radiofrequency signal;
- a transmitter (32) including a preamplifier (33) and a first transistor (36) connected in cascade, this transmitter being able to provide a radiofrequency signal containing said data to be transmitted to said antenna; and
- coupling means (30) connected across said antenna and said transmitter, and including a phase lag circuit (42) able to achieve the coupling of said antenna and said transmitter,

this arrangement being **characterised in that** said coupling means further include switching means (43) connected across the system's earth and the source terminal of said first transistor, so as to be able to switch the latter to an ON state, respectively to an OFF state, when said antenna is, respectively is not, in transmission phase.

**2.** Antenna arrangement (29) according to claim 1, **characterised in that** said first transistor (36) is formed by a field effect transistor having an N type conductivity channel.

**3.** Antenna arrangement according to claim 1, **characterised in that** said switching means (43) include:

- a second transistor (48) able to be controlled by a first control signal ($V_T$) representative of the fact that said antenna is, or respectively is not, in transmission phase and, in response, to be in an ON state, respectively an OFF state, so that said first transistor is itself in the ON state, respectively the OFF state;
- a first capacitor (46) connected in parallel across the drain and source terminals of said second transistor (48); and
- a first resistor (52) connected, on the one hand, to the node of connection across said first capacitor (46) and said second transistor and, on the other hand, to a power supply terminal.

**4.** Antenna arrangement (29) according to claim 1, **characterised in that** said second transistor (48) is formed by a field effect transistor having a N type conductivity channel.

**5.** Antenna arrangement (29) according to claim 1, **characterised in that** said phase lag circuit (42) includes a first inductor (55) and second and third capacitors (54, 56).

**6.** Antenna arrangement (29) according to claim 1, **characterised in that** said coupling means (30) further include adjustment means (44) connected in series across said transmitter (32) and said phase lag circuit (42).

**7.** Antenna arrangement (29) according to claim 6, **characterised in that** said adjustment means (44) include a fourth capacitor (60) and a second inductor (58).

**8.** Antenna arrangement (29) according to claim 1, **characterised in that** said transmitter further includes:

- a fifth capacitor (34) connected in series across said preamplifier (33) and said first transistor (36);
- a first high impedance (40) connected between the system's earth and the node of connection of said first transistor and second power amplifier; and
- a third inductor (38) in series with said first transistor across a power supply terminal and the system's earth.

9. Antenna arrangement (29) according to claim 8, **characterised in that** said transmitter (32) further includes a generator (74) connected in series across said first high impedance (40) and the system's earth, this generator being able to provide a constant signal (Ubias) so that said first transistor (36) is in the ON state.

10. Antenna arrangement (29) according to claim 8, **characterised in that** said transmitter (32) further includes a fourth inductor (38a), a second high impedance (40a) and a sixth capacitor (34a), these components being arranged so that said switching means (43) can switch said preamplifier (33) to an activated state, respectively a deactivated state, when said antenna (A) is, respectively is not, in transmission phase.

11. Antenna arrangement (29) according to claim 10, **characterised in that** said preamplifier (33) is formed by a third transistor being able to be in an ON state, respectively in an OFF state, when said second transistor (48) is itself in the ON state, respectively in the OFF state.

12. Antenna arrangement (29) according to claim 11, **characterised in that** said third transistor is formed by a field effect transistor having a N type conductivity channel.

13. Antenna arrangement (29) according to claim 1, **characterised in that** it further includes a receiver (31) able to be coupled to said antenna when the latter is in reception phase, and to be protected from said transmitter when the latter is not in reception phase; and **in that** said receiver is connected across said coupling means (30) and said antenna (A) so that, when the latter is not coupled to said transmitter (32), the latter is isolated from said receiver, which assures optimum coupling across said antenna and said receiver.

14. Antenna arrangement (29) according to claim 1, **characterised in that** said transmitter (32) and said coupling means (30) are made in a monolithic manner in a single semiconductor substrate.

15. Antenna arrangement (29) according to claim 14, **characterised in that** said antenna (A) is made in a monolithic manner in said semiconductor substrate.

16. Antenna arrangement (29) according to claim 13, **characterised in that** said receiver (31) is made in a monolithic manner in said semiconductor substrate.

**Patentansprüche**

1. Antennenanordnung (29), die umfasst:

   - eine Antenne (A), die Daten in Form eines Hochfrequenzsignals senden kann;
   - einen Sender (32), der einen Vorverstärker (33) und einen ersten Transistor (36), die in Kaskade geschaltet sind, aufweist, wobei dieser Sender an die Antenne ein Hochfrequenzsignal liefern kann, das die zu sendenden Daten enthält; und
   - ein Kopplungsmittel (30), das zwischen die Antenne und den Sender geschaltet ist und eine Phasenverzögerungsschaltung (42) aufweist, die die Kopplung der Antenne und des Senders verwirklichen kann,

   wobei diese Antennenanordnung **dadurch gekennzeichnet ist, dass** das Kopplungsmittel außerdem ein Umschaltmittel (43) aufweist, das zwischen die Masse des Systems und den Source-Anschluss des ersten Transistors geschaltet ist, derart, dass dieser letztere in einen durchgeschalteten Zustand bzw. in einen gesperrten Zustand umgeschaltet werden kann, wenn die Antenne in der Sendephase ist bzw. nicht ist.

2. Antennenanordnung (29) nach Anspruch 1, **dadurch gekennzeichnet, dass** der erste Transistor (36) durch einen Feldeffekttransistor mit einem Kanal, der eine Leitfähigkeit des Typs N hat, gebildet ist.

3. Antennenanordnung (29) nach Anspruch 1, **dadurch gekennzeichnet, dass** das Umschaltmittel (43) umfasst:

   - einen zweiten Transistor (48), der durch ein erstes Steuersignal ($V_T$) gesteuert werden kann, das die Tatsache repräsentiert, dass die Antenne in der Sendephase ist bzw. nicht ist, und in Reaktion darauf in einen durchgeschalteten Zustand bzw. in einen gesperrten Zustand versetzt werden kann, derart, dass der erste Transistor seinerseits im durchgeschalteten Zustand bzw. im gesperrten Zustand ist;
   - einen ersten Kondensator (46), der zu dem Drain-Anschluss und zu dem Source-Anschluss des zweiten Transistors (48) parallel geschaltet ist; und
   - einen ersten Widerstand (52), der einerseits mit dem Verbindungspunkt zwischen dem ersten Kondensator (46) und dem zweiten Transistor und andererseits mit einem Versorgungsanschluss verbunden ist.

**4.** Antennenanordnung (29) nach Anspruch 1, **dadurch gekennzeichnet, dass** der zweite Transistor (48) durch einen Feldeffekttranisistor mit einem Kanal, der eine Leitfähigkeit vom Typ N hat, gebildet ist.

**5.** Antennenanordnung (29) nach Anspruch 1, **dadurch gekennzeichnet, dass** die Phasenverzögerungsschaltung (42) eine erste Induktivität (55) und einen zweiten und einen dritten Kondensator (54, 56) umfasst.

**6.** Antennenanordnung (29) nach Anspruch 1, **dadurch gekennzeichnet, dass** das Kopplungsmittel (30) außerdem ein Einstellmittel (44) umfasst, das zwischen den Sender (32) und die Phasenverzögerungsschaltung (42) in Reihe geschaltet ist.

**7.** Antennenanordnung (29) nach Anspruch 6, **dadurch gekennzeichnet, dass** das Einstellmittel (44) einen vierten Kondensator (60) und eine zweite Induktivität (58) umfasst.

**8.** Antennenanordnung (29) nach Anspruch 1, **dadurch gekennzeichnet, dass** der Sender außerdem umfasst:

    - einen fünften Kondensator (34), der zwischen den Vorverstärker (33) und den ersten Transistor (36) in Reihe geschaltet ist,
    - eine erste hohe Impedanz (40), die zwischen die Masse des Systems und den Verbindungspunkt des ersten Transistors mit dem Leistungsverstärker geschaltet ist; und
    - eine dritte Induktivität (38), die zwischen einem Versorgungsanschluss und der Masse des Systems mit dem ersten Transistor in Reihe geschaltet ist.

**9.** Antennenanordnung (29) nach Anspruch 8, **dadurch gekennzeichnet, dass** der Sender (32) außerdem einen Generator (74) umfasst, der zwischen der ersten hohen Impedanz (40) und der Masse des Systems in Reihe geschaltet ist, wobei dieser Generator ein konstantes Signal (Ubias) liefern kann, derart, dass der erste Transistor (36) im durchgeschalteten Zustand ist.

**10.** Antennenanordnung (29) nach Anspruch 8, **dadurch gekennzeichnet, dass** der Sender (32) außerdem eine vierte Induktivität (38ä), eine zweite hohe Impedanz (40a) und einen sechsten Kondensator (34a) umfasst, wobei diese Komponenten in der Weise angeordnet sind, dass das Umschaltmittel (43) den Vorverstärker (33) in einen aktiven Zustand bzw. in einen deaktivierten Zustand umschalten kann, wenn die Antenne (A) in der Sendephase ist bzw. nicht ist.

**11.** Antennenanordnung (29) nach Anspruch 10, **dadurch gekennzeichnet, dass** der Vorverstärker (33) durch einen dritten Transistor gebildet ist, der in einem durchgeschalteten Zustand bzw. in einem gesperrten Zustand sein kann, wenn der zweite Transistor (48) seinerseits im durchgeschalteten Zustand bzw. im gesperrten Zustand ist.

**12.** Antennenanordnung (29) nach Anspruch 11, **dadurch gekennzeichnet, dass** der dritte Transistor durch einen Feldeffekttransistor mit einem Kanal, der eine Leitfähigkeit des Typs N hat, gebildet ist.

**13.** Antennenanordnung (29) nach Anspruch 1, **dadurch gekennzeichnet, dass** sie außerdem einen Empfänger (31) umfasst, der mit der Antenne verbunden werden kann, wenn diese in der Empfangsphase ist, und von dem Sender geschützt sein kann, wenn diese nicht in der Empfangsphase ist; und dass der Empfänger zwischen das Kopplungsmittel (30) und die Antenne (A) geschaltet ist, derart, dass, wenn diese nicht mit dem Sender (32) gekoppelt ist, dieser letztere vom Empfänger getrennt ist, was eine optimale Kopplung zwischen der Antenne und dem Empfänger gewährleistet.

**14.** Antennenanordnung (29) nach Anspruch 1, **dadurch gekennzeichnet, dass** der Sender (32) und das Kopplungsmittel (30) monolithisch in einem einzigen Halbleitersubstrat verwirklicht sind.

**15.** Antennenanordnung (29) nach Anspruch 14, **dadurch gekennzeichnet, dass** die Antenne (A) monolithisch im Halbleitersubstrat verwirklicht ist.

**16.** Antennenanordnung (29) nach Anspruch 13 , **dadurch gekennzeichnet, dass** der Empfänger (31) monolithisch in dem Halbleitersubstrat verwirklicht ist.

# Fig. 1A
(ART ANTERIEUR)

# Fig. 1B
## (ART ANTERIEUR)

Fig. 2

EP 1 039 652 B1

# Fig. 3

# Fig. 4

# Fig. 5

EP 1 039 652 B1

Fig. 6

# Fig. 7

EP 1 039 652 B1